# EUROPÄISCHE PATENTSCHRIFT

(11) **EP 2 697 782 B1**
(45) Veröffentlichungstag und Bekanntmachung des Hinweises auf die Patenterteilung: **04.09.2019**
(21) Anmeldenummer: 12710181.4
(22) Anmeldetag: 27.02.2012
(51) Int. Cl.: G07C 9/00, B60R 25/00

(54) **MOBILER IDENTIFIKATIONSGEBER MIT EINEM BEZAHLELEMENT**
MOBILE IDENTIFICATION TRANSMITTER HAVING A COUNTER ELEMENT
ÉMETTEUR D'IDENTIFICATION MOBILE AVEC ÉLÉMENT DE PAIEMENT

(30) Priorität: 15.04.2011 DE 102011002112
(43) Veröffentlichungstag der Anmeldung: 19.02.2014
(73) Patentinhaber: Huf Hülsbeck & Fürst GmbH & Co. KG, 42551 Velbert (DE)
(72) Erfinder: GELDMACHER, Alexander, 42113 Wuppertal (DE)
(74) Vertreter: Vogel, Andreas
(86) Internationale Anmeldenummer: PCT/EP2012/053257
(87) Internationale Veröffentlichungsnummer: WO 2012/139802

(56) Entgegenhaltungen:
- EP-A1- 2 697 784
- EP-A2- 2 264 672
- DE-A1- 10 240 811
- DE-A1-102005 030 081
- DE-A1-102009 037 086
- US-A1- 2006 219 776

## Beschreibung

Die Erfindung betrifft einen mobilen Identifikationsgeber für eine Aktivierung einer Schließvorrichtung eines Kraftfahrzeuges, der eine fest in einem Gehäuse befestigte Dateneinheit mit gespeicherten Identifikationsdaten und eine Kommunikationsschnittstelle aufweist, die mit einer kraftfahrzeugsseitigen Kommunikationsschnittstelle in Kommunikation bringbar ist.

In der DE 10 2010 061 331.2 ist ein schlüsselloses Schließsystem eines Kraftfahrzeuges offenbart. Hierbei kann der berechtigte Benutzer aktiv den mobilen Identifikationsgeber betätigen, um ein Signal zur Basisstation, beispielsweise an eine im Kraftfahrzeug vorgesehene Empfangseinheit zum Entriegeln/Verriegeln des Fahrzeuges zu übermitteln. Die in der Dateneinheit enthaltenen Identifikationsdaten können im Rahmen bekannter Zugangskontrollverfahren auch neu generiert werden. Ferner finden elektronische Schließsysteme für Kraftfahrzeuge eine Marktverbreitung, die neben der beschriebenen bedienungsabhängigen Funktionalität zusätzlich mit einer bedienungsunabhängigen Funktionalität, der so genannten "Keyless-Go"- oder "Keyless-Entry"-Funktionalität, ausgestaltet sind. Im Gegensatz zur konventionellen Fernbedienung ist bei der Keyless-Entry-Funktionalität keine Bedienung des Identifikationsgebers zur Entriegelung/Verriegelung einer Fahrzeugtür oder des Fahrzeugkofferraums oder weiterer Bauteile des Kraftfahrzeuges notwendig. Vielmehr wird bei der Betätigung des Türgriffes an der Autotür eine Kommunikation zwischen dem Kraftfahrzeug und dem Identifikationsgeber gestartet und bei positiver Authentifikation die elektrische Türöffnung, Kofferraumöffnung etc. des Kraftfahrzeuges aktiviert. Das bedeutet, dass der einen gültigen Identifikationsgeber mitführende Benutzer sein Kraftfahrzeug entriegeln und/oder verriegeln kann, ohne aktiv den Identifikationsgeber betätigen zu müssen. Beispielsweise ist ein Zugangskontrollverfahren bekannt, das bei Betätigung des Türgriffes ein Sendeimpuls über eine induktive Antenne zum Identifikationsgeber überträgt. Der Identifikationsgeber wird daraufhin geweckt und sendet ein Funksignal der kraftfahrzeugseitigen Sende-/Empfangseinheit, die dieses Signal vom Steuergerät für die Zugangsberechtigung weiterleitet. Wird hier der richtige Code erkannt, so wird die elektrische Türentriegelung aktiviert. Dasselbe kann sich bei einer Türverriegelung durch Berührung des Türgriffes abspielen.

Es ist Aufgabe der vorliegenden Erfindung einen mobilen Identifikationsgeber für eine schlüssellose Aktivierung einer Schließvorrichtung eines Kraftfahrzeuges zu schaffen, der eine größere Funktionalität aufweist und einfach gestaltet ist, wobei gleichzeitig dem Benutzer ein komfortabler mobiler Identifikationsgeber bereitgestellt wird.

Zur Lösung dieser Aufgabe wird ein mobiler Identifikationsgeber mit sämtlichen Merkmalen des Anspruches 1 vorgeschlagen. In den abhängigen Ansprüchen sind bevorzugte Weiterbildungen ausgeführt.

Dazu ist erfindungsgemäß vorgesehen, dass das Gehäuse eine Aufnahme aufweist, in der ein herausnehmbares Bezahlelement gehalten ist, wobei eine Notschlüsselhandhabe, die lösbar am Gehäuse angeordnet ist, die Aufnahme vom Außenbereich verschließt. Das Bezahlelement kann bei Bedarf aus dem Gehäuse des Identifikationsgebers vom Benutzer entnommen werden. Dies ist beispielsweise dann der Fall, wenn das Kraftfahrzeug mit dem Identifikationsgeber in einer Werkstatt abgegeben wird oder eine dritte Person den mobilen Identifikationsgeber erhält, um beispielsweise das Kraftfahrzeug einzuparken, etc. Mit Hilfe des Bezahlelementes, welches innerhalb des Gehäuses des Identifikationsgebers gehalten ist, kann der Benutzer diverse Bezahlaktionen ausführen, beispielsweise in einer Tankstelle, in einem Kaufhaus, etc. Während des Bezahlvorganges verbleibt vorzugsweise das Bezahlelement innerhalb des Gehäuses. Um die Gefahr auszuschließen, dass ein Unberechtigter mit Hilfe des mobilen Identifikationsgebers eine Bezahlfunktion ausführt, kann der berechtigte Benutzer zu jeder Zeit das Bezahlelement aus dem Gehäuse auf einfache Art entnehmen, wobei sämtliche, weitere Funktionen des mobilen Identifikationsgebers, insbesondere zur schlüssellosen Aktivierung der Schließvorrichtung des Kraftfahrzeuges erhalten bleiben.

In einer möglichen Ausführungsform der Erfindung kann das Bezahlelement mit einem elektronischen Zahlungssystem in Datenkommunikation bringbar sein, insbesondere dass das Bezahlelement eine Kreditkartenfunktion und/oder eine Debitkartenfunktion aufweist. Das Bezahlelement kann einen Mikroprozessor aufweisen, wobei das Bezahlelement mit dem Zahlungssystem kommunizieren kann, insbesondere finanzbezogene Ferntransaktionen ausführen kann, wie z. B. einen bestimmten Geldbetrag auf das Bezahlelement neu zu laden oder einen definierten Betrag vom Bezahlelement abzubuchen. Zum Beispiel kann das Bezahlelement lediglich für kleine Beträge vorgesehen sein, nämlich als Bezahlmittel zum Bezahlen kleiner täglicher Kosten, wodurch auf diese Weise ein Einsatz für die Verwendung von bargeldlosen Kleingeld geboten wird. Zudem kann das Bezahlelement derart ausgestattet sein, dass Beträge ohne jeglicher Begrenzung in Kommunikation mit dem Zahlungssystem transferierbar sind.

Vorteilhafterweise ist das Bezahlelement mit einem Speicher ausgeführt, wobei das Bezahlelement in einer weiteren Ausführungsform der Erfindung mit einer integrierten Schaltung ausgebildet sein kann, die einen oder mehrere Mikroprozessoren aufweisen kann. Hierbei spielen der Mikroprozessor und sein Speicher in einer möglichen Ausführungsform der Erfindung eine wichtige Rolle im Hinblick auf die Sicherheit, weil die Speicher z. B. Codes für die Autorisierung, für die Steuerung, für neue Saldenwerte beinhalten können. In einer möglichen Ausgestaltung der Erfindung kann der Mikroprozessor in der Lage sein, einen komplexen Berechnungsalgorithmus auszuführen oder einen geheimen Wert aus Identifikationsdaten, die in ihn eingegeben werden, zu überprüfen.

Nachdem dieses Bezahlelement in Datenkommunikation mit dem elektronischen Zahlungssystem gebracht worden ist, kann es in einer möglichen Ausführungsform der Erfindung vorgesehen sein, dass das Bezahlelement dann funktionslos bleibt, wenn der berechnete geheime Code nicht equivalent einem bereits in der Karte befindlichen geheimen Code ist.

In einer weiteren die Erfindung verbessernden Maßnahme kann das Bezahlelement eine eigene Kommunikationsschnittstelle für die Kommunikation mit dem Zahlungssystem aufweisen. Das bedeutet, dass zur schlüssellosen Aktivierung der Schließvorrichtung des Kraftfahrzeuges eine unabhängige, zweite Kommunikationsschnittstelle am Identifikationsgeber genutzt wird.

Selbstverständlich ist es denkbar, dass lediglich eine Kommunikationsschnittstelle am mobilen Identifikationsgeber vorgesehen ist, die sowohl für die Kommunikation mit dem Zahlungssystem als auch zur Kommunikation mit der kraftfahrzeugseitigen Kommunikationsschnittstelle für die schlüssellose Aktivierung der Schließvorrichtung verwendet wird.

Besonders vorteilhaft ist es, dass mit Hilfe des herausnehmbaren Bezahlelementes ein bargeldloser Zahlungsverkehr am Bezahlpunkt (point of sale, POS.) stattfinden kann, wobei ein elektronisches Lastschriftverfahren ausgeführt werden kann, welches beispielsweise in einem Online-Verfahren oder in einem Offline-Verfahren stattfinden kann. Bei dem Online-Verfahren steht das elektronische Zahlungssystem mit oder ohne Unterstützung eines Computers mit einem Kartenbetreiber, beispielsweise Maestro, VISA, etc. in Verbindung. Dabei wird das Bezahlelement mit Hilfe von Nummern und PIN auf Missbrauch geprüft und kann sodann die Belastung des Kundenkontos durch eine entsprechende Transaktion zwischen dem Kartenbetreiber und der Kundenbank veranlassen. Ebenfalls ist es denkbar, dass das elektronische Lastschriftverfahren im Offline-Verfahren betrieben wird, wobei bei der Bezahlaktion lediglich die Kontendaten genutzt werden. Zum Zwecke der Abbuchungserlaubnis, insbesondere des Einzugsverfahrens lässt sich der Verkäufer, Händler, etc. eine Abbuchungserlaubnis auf der Rechnung vom Kunden, der den erfindungsgemäßen Identifikationsgeber bei sich trägt, per Unterschrift quittieren.

Vorteilhafterweise kann die Aufnahme gekapselt sein, sodass das Bezahlelement zuverlässig vom Außenbereich abgedichtet ist. Hierbei kann ein Dichtelement vorgesehen sein, welches materialeinheitlich und/oder monolithisch mit dem Gehäuse oder der Aufnahme ausgeführt ist. Das Dichtelement kann z. B. als Labyrinthdichtung ausgebildet sein. Das Dichtelement kann in einer weiteren Ausführungsform der Erfindung auch am Bezahlelement vorgesehen sein, wobei das Dichtelement den relevanten Bereich des Bezahlelementes, d. h. den Chip, der beispielsweise den Mikroprozessor und/oder die Schaltung und/oder den Speicher zuverlässig abdichtet.

In einer nicht unter die Erfindung fallenden Maßnahme kann ein Batteriefachdeckel vorgesehen sein, der abnehmbar am Gehäuse gehalten ist, wobei der Batteriefachdeckel die Aufnahme verschließt. Das bedeutet, dass in der Aufnahme, die vom Batteriefachdeckel verschließbar ist, sowohl das Bezahlelement als auch die Batterie, die zur Stromversorgung für den mobilen Identifikationsgeber dient, anordbar sind. Wenn der Benutzer das Bezahlelement entnehmen möchte, ist lediglich der Batteriefachdeckel vom Gehäuse abzunehmen, um das Bezahlelement aus der Aufnahme zu entnehmen. Vorteilhafterweise ist der Batteriefachdeckel mit einem Dichtelement versehen, das die Aufnahme zuverlässig vom Außenbereich abdichtet und schützt, damit keine Feuchtigkeit, Schmutzpartikel, etc. in die Aufnahme des Identifikationsgebers eindringen können und somit etwaig eine Kommunikationsstörung zwischen dem Bezahlelement und dem elektronischen Zahlungssystem hervorrufen.

Die Notschlüsselhandhabe ist mit einem Notschlüssel ausgeführt, der beispielsweise in einen Schließzylinder kraftfahrzeugseitig einbringbar ist, um manuell die Schließvorrichtung des Kraftfahrzeuges zu aktivieren, um eine Entriegelung oder Vorriegelung beispielsweise der Tür oder des Kofferraumes oder des Tankdeckels vorzunehmen. Im eingesetzten Zustand der Notschlüsselhandhabe befindet sich der Notschlüssel innerhalb einer Aufnahme des Gehäuses und ist somit vom Außenbereich des Identifikationsgebers geschützt und/oder abgedichtet und/oder nicht sichtbar. In einer möglichen Ausführungsform der Erfindung kann sich der Notschlüssel in der gleichen Aufnahme des Gehäuses befinden, in der auch die Batterie und/oder das Bezahlelement aufgenommen sind.

Ferner ist es für ein nicht unter die vorliegende Erfindung fallendes Beispiel denkbar, dass das Gehäuse des mobilen Identifikationsgebers ebenfalls durch die Notschlüsselhandhabe gebildet ist, die abnehmbar ist, sodass das Gehäuse zumindest zweiteilig ausgeführt ist. Zudem kann die Aufnahme für das Bezahlelement in dieser Notschlüsselhandhabe integriert sein, sodass der Benutzer lediglich die Notschlüsselhandhabe vom restlichen Gehäuse entfernen muss, um das Bezahlelement dem mobilen Identifikationsgeber zu entnehmen. Ohne Notschlüsselhandhabe ist dieser mobile Identifikationsgeber selbstverständlich in seiner Funktionsweise nicht eingeschränkt, da eine schlüssellose Aktivierung der Schließvorrichtung des Kraftfahrzeuges möglich ist. Ohne Notschlüsselhandhabe ist jedoch eine Bezahlfunktion ausgeschlossen.

Ferner kann vorgesehen sein, dass die Aufnahme derart am Gehäuse ausgeführt ist, dass das Bezahlelement von außen entnehmbar ist. Zum Beispiel ist es denkbar, dass das Bezahlelement sich innerhalb einer Einschuböffnung des Gehäuses befindet, wobei der Benutzer über eine einfache manuelle Betätigung das Bezahlelement aus der Einschuböffnung entnehmen kann. Das Bezahlelement kann beispielsweise über Rastelemente zuverlässig in der Einschuböffnung gehalten sein. Das Bezahlelement kann beispielsweise mit einem kleinen Bereich aus der Einschuböffnung herausragen, damit der Benutzer auf einfache Weise das Bezahlelement manuell erfassen kann. Ebenfalls ist es denkbar, dass über eine entsprechende Betätigung eines Schalters, Elementes, etc. am Identifikationsgeber das Bezahlelement "automatisch" aus der Einschuböffnung ausfährt, und somit der Benutzer das Bezahlelement entnehmen kann.

Vorteilhafterweise kann eine Platine innerhalb des Gehäuses angeordnet sein, die in Kontakt mit dem Bezahlelement und/oder mit der fest angeordneten Dateneinheit und/oder mit der Kommunikationsschnittstelle des Identifikationsgebers und/oder mit einer Batterie steht.

Um die Kommunikationssicherheit zwischen dem Bezahlelement und dem Zahlungssystem zu erhöhen, hat vorteilhafterweise die Kommunikationsschnittstelle des Bezahlelementes eine Reichweite von weniger als 20 cm, insbesondere weniger als 10 cm. Vorteilhafterweise kommunizieren das Bezahlelement und das elektrische Zahlungssystem kryptographisch miteinander. Ebenfalls kann vorgesehen sein, dass die Kommunikationsschnittstelle des Bezahlelementes in einem Frequenzbereich von ca. 13,56 MHz arbeitet, wobei insbesondere Datenübertragungsraten von mehr als 400 kBit pro Sekunde erzielbar sind. Die Kommunikation zwischen dem Bezahlelement und dem Zahlungssystem kann über Bluetooth oder über eine Near Field Communication-Technik ausgeführt werden.

In einer weiteren die Erfindung verbessernden Maßnahme kann vorgesehen sein, dass das Gehäuse ein Display aufweist, das mit dem Bezahlelement verbunden ist und/oder mit dem elektrischen Zahlungssystem verbindbar ist, wobei insbesondere das Display Anzeige- und Eingabefunktionen mitumfasst. Beispielsweise ist es denkbar, dass über das Display Sicherheitscodes einzugeben sind, um die endgültige Bezahlaktion zu bestätigen. Ebenfalls ist es denkbar, dass beispielsweise der Benutzer seine Fingerprint (Fingerabdruck) dem Display durch eine entsprechende Kontaktierung zur Verfügung stellt. Falls dieser Fingerprint korrekt ist, erfolgt die entsprechende Bezahlaktion über das Bezahlelement. Über das Display kann ferner angezeigt werden, wie hoch der Geldbetrag auf dem Bezahlelement beträgt.

Eine weitere nicht unter die Erfindung fallende Ausbildung des mobilen Identifikationsgebers kann vorsehen, dass ein Batteriefachdeckel Bestandteil des Gehäuses ist, wobei die Aufnahme am vom Gehäuse lösbaren Batteriefachdeckel angeordnet ist. Das Gehäuse des mobilen Identifikationsgebers kann derart ausgeführt sein, dass selbst ohne Batteriefachdeckel, der vom restlichen Gehäuse abgenommen ist, der mobile Identifikationsgeber in seiner Funktionalität zur schlüssellosen Aktivierung der Schließvorrichtung des Kraftfahrzeuges nicht eingeschränkt ist. Darüber hinaus besteht nicht die Gefahr, dass ohne den Batteriedeckel die Batterie aus dem Gehäuse fällt. Bei dieser Ausführungsform kann vorgesehen sein, dass ein zweiter Batteriefachdeckel im Gehäuse integriert ist, der manuell aus einer Öffnung, Vertiefung, Schacht, bewegt werden kann, um die Batterie vom Außenbereich des Identifikationsgebers zu verschließen. In der Regel wird jedoch der Benutzer die Bezahlkarte aus der Aufnahme des Batteriefachdeckels entnehmen und anschließend den Batteriefachdeckel am Gehäuse befestigen.

Die Kommunikationsschnittstelle für das Bezahlelement und/oder des Identifikationsgebers, die zur Datenkommunikation mit der kraftfahrzeugseitigen Kommunikationsschnittstelle dient, ist vorteilhafterweise eine Sende- und/oder Empfangseinrichtung.

Eine weitere vorteilhafte Ausgestaltung der Erfindung sieht vor, dass der Identifikationsgeber ein kombinierter mechanischer und elektronischer Schlüssel ist. Der mechanische Schlüssel kann in eine Ruhelage und in eine Arbeitslage bringbar sein, wobei erfindungsgemäß der mechanische Schlüssel in seiner Ruhelage die Aufnahme für das Bezahlelement vollständig verdeckt. Das in der Aufnahme sich befindende Bezahlelement ist somit durch den mechanischen Schlüssel in seiner Ruhelage geschützt, sodass ein Herausfallen des Bezahlelementes ausgeschlossen ist. Der mechanische Schlüssel ist zweckmäßigerweise drehbar am Gehäuse gelagert.

Das Display des Gehäuses kann beispielsweise eine Vielzahl an LED-Leuchtmitteln aufweisen. Ebenfalls ist es denkbar, dass das Display aus organischen Leuchtdioden (OLED) ausgeführt ist, die halbleitende Polymere oder kleine Moleküle aufweisen. Der große Vorteil von OLEDs ist, dass sie ohne Hintergrundbeleuchtung auskommen können. Dieses Display gemäß des erfindungsgemäßen Identifikationsgebers benötigt deutlich weniger Energie und kann besonders gut bei einem kleinen Identifikationsgeber eingesetzt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Es zeigen:
- Fig. 1: einen Identifikationsgeber, der in Datenkommunikation mit einem Kraftfahrzeug und einem elektronischen Zahlungssystem steht,
- Fig. 2: eine mögliche Ausführungsform des Identifikationsgebers,
- Fig. 3: eine weitere Ausführungsform des Identifikationsgebers,
- Fig. 4: ein weiteres Ausführungsbeispiel eines mobilen Identifikationsgebers,
- Fig. 5: ein erfindungsgemäßes Ausführungsbeispiel eines mobilen Identifikationsgebers,
- Fig. 6: eine weitere Ausführungsvariante des mobilen Identifikationsgebers und
- Fig. 7: eine dreidimensionale Ansicht auf einen mobilen Identifikationsgeber, bei dem der Batteriefachdeckel abgenommen ist.

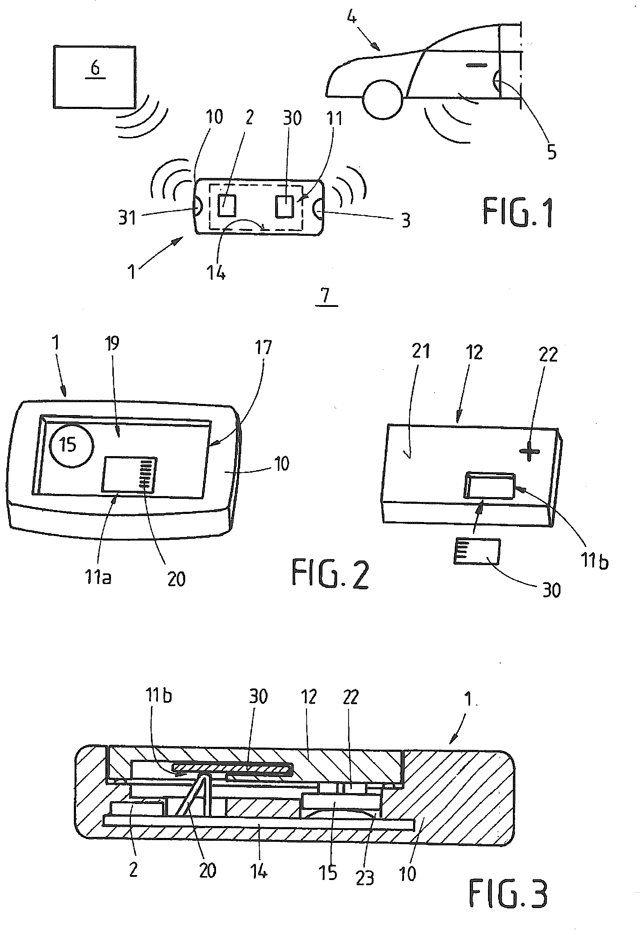

In Figur 1 ist schematisch ein System offenbart, bei dem ein Bezahlelement 30, welches innerhalb eines mobilen Identifikationsgebers 1 angeordnet ist, in Datenkommunikation mit einem elektronischen Zahlungssystem 6 steht. Zudem ist der mobile Identifikationsgeber 1 dafür geeignet, eine schlüssellose Aktivierung einer Schließvorrichtung eines Kraftfahrzeuges 4 durchzuführen. Der mobile Identifikationsgeber 1 umfasst eine fest in einem Gehäuse 10 befestigte Dateneinheit 2, in der gespeicherte Identifikationsdaten enthalten sind. Zudem weist das Kraftfahrzeug 4 eine Kommunikationsschnittstelle 5 auf, die als Sende- und/oder Empfangseinheit ausgeführt sein kann. Auch der mobile Identifikationsgeber 1 weist eine Kommunikationsschnittstelle 3 auf, die mit der kraftfahrzeugseitigen Kommunikationsschnittstelle 5 kommunizieren kann. Die Schließvorrichtung des Kraftfahrzeuges 4 wird erst dann aktiviert, um einen Entriegelungsvorgang oder Verriegelungsvorgang der Tür vorzunehmen, wenn nach der Kommunikation zwischen den genannten Kommunikationsschnittstellen 3,5 eine positive Authentifikation festgestellt wird. Das bedeutet, dass der einen gültigen Identifikationsgeber 1 mitführende Benutzer sein Kraftfahrzeug beispielsweise öffnen kann. Hierbei ist die Dateneinheit 2 fest und nicht aus dem Gehäuse 10 entnehmbar innerhalb des mobilen Identifikationsgebers 1 gehalten. In der Dateneinheit 2 sind Identifikationsdaten für die Authentifizierung des Identifikationsgebers 1 gespeichert.

Das Gehäuse 10 des mobilen Identifikationsgebers 1 ist mit einer Aufnahme 11 ausgeführt, in der das Bezahlelement 30 eingesetzt ist. Wie die Figuren 2 bis Figur 7 zeigen, kann die Aufnahme 11 auf diverse Art ausgestaltet sein, um zuverlässig das Bezahlelement 30 innerhalb des Identifikationsgebers 1 zu halten. In allen Ausführungsbeispielen ist dieses Bezahlelement 30 jedoch derart in der Aufnahme 11 eingesetzt, dass der Benutzer bei Bedarf das Bezahlelement 30 aus der Aufnahme 11 entnehmen kann. Gemäß Figur 1 ist es denkbar, dass für die Kommunikation mit dem elektronischen Zahlungssystem 6 ebenfalls die Kommunikationsschnittstelle 3 verwendet wird, die auch für die Kommunikation mit der kraftfahrzeugseitigen Kommunikationsschnittstelle 5 eingesetzt wird. Alternativ ist es denkbar, dass für die Kommunikation mit dem elektronischen Zahlungssystem 6 eine zweite Kommunikationsschnittstelle 31 im mobilen Identifikationsgeber 1 vorgesehen ist. Hierbei kann die Kommunikationsschnittstelle 31 beispielsweise am Gehäuse 10 des mobilen Identifikationsgebers 1 angeordnet sein. Ebenfalls ist es denkbar, dass das Bezahlelement 30 eigens mit dieser Kommunikationsschnittstelle 31 ausgeführt ist. Das bedeutet, dass die Kommunikationsschnittstelle 31 im Bezahlelement 30 integriert sein kann.

Das Bezahlelement 30 kann z. B. einen Chip, einschließlich eines Mikroprozessors, Schaltung, Speichereinheit, etc. aufweisen, um Bezahlaktionen mit dem Zahlungssystem 6 auszuführen. Das Zahlungssystem 6 kann z. B. an einem Bezahlpunkt (POS) positioniert sein, wobei ein bargeldloser Zahlungsverkehr zwischen dem Käufer, der beispielsweise den mobilen Identifikationsgeber 1 bei sich trägt, und einem Verkäufer und/oder einem Kreditinstitut zu gewährleisten. Hierbei kann das Bezahlelement 30 beispielsweise eine Kreditkartenfunktion und/oder eine Debitkartenfunktion aufweisen.

Wie in Figur 1 schematisch gezeigt ist, befindet sich innerhalb des Gehäuses 10 eine Platine 14, die in Kontakt mit dem Bezahlelement 30 und mit der fest angeordneten Dateneinheit 2 sowie mit der Kommunikationsschnittstelle 3,31 steht. Falls gemäß Figur 1 eine Batterie zur Stromversorgung des mobilen Identifikationsgebers eingesetzt wird, ist selbstverständlich diese Batterie ebenfalls im elektrischen Kontakt mit der Platine 14.

In Figur 2 ist ein nicht unter die Erfindung fallendes Beispiel eines mobilen Identifikationsgebers 1 gezeigt, welcher entsprechend Figur 1 mit einem Kraftfahrzeug 4 sowie einem Zahlungssystem 6 kommunizieren kann. Das Gehäuse 10 weist eine Öffnung 19 auf, die randseitig durch ein Dichtelement 17 umgeben ist. Innerhalb der Öffnung 19 ist die Aufnahme 11a für das Bezahlelement 30 vorgesehen. Die Aufnahme 11a kann beispielsweise als Vertiefung innerhalb der Öffnung 19 ausgeführt sein, in die das Bezahlelement 30 eingesetzbar ist. Beabstandet zur Aufnahme 11a ist eine Batterie 15 innerhalb der Öffnung 19 angeordnet. Die Öffnung 19 kann durch einen Batteriefachdeckel 12 verschlossen werden. Der Batteriefachdeckel 12 befindet sich gemäß Figur 2 rechts vom übrigen Gehäuse 10, wobei die Innenseite 21 des Batteriefachdeckels 12 mit der Aufnahme 11b für das Bezahlelement 30 ausgeführt ist. Das Bezahlelement 30 wird in die Aufnahme 11b hineingelegt. Hierbei kann die Aufnahme 11b mit diversen Haltemitteln, insbesondere Rastmitteln ausgeführt sein, damit das Bezahlelement 30 zuverlässig in der Aufnahme 11b gehalten ist. Nachdem das Bezahlelement 30 im Batteriefachdeckel 12 eingelegt ist, kann der Batteriefachdeckel 12 in die Öffnung 19 geführt werden. Im eingesetzten Zustand des Batteriefachdeckels 12 befindet sich das Bezahlelement 30 ebenfalls in der Aufnahme 11a, die sich innerhalb der Öffnung 19 des Gehäuses 10 befindet. Gleichzeitig weist die Aufnahme 11a Kontakte 20 auf, die für eine entsprechende elektrische Verbindung mit dem Bezahlelement 30, insbesondere mit dem Chip, der am Bezahlelement 30 angeordnet ist, sorgen. Ferner weist die Innenseite 21 ein Lager 22 auf, welches vorsprungartig aus der Innenseite 21 hervorsteht. Das Lager 22 weist im vorliegenden Ausführungsbeispiel eine kreuzartige Geometrie auf, die im eingesetzten Zustand des Batteriefachdeckels 12 innerhalb der Öffnung 19 auf die Batterie 15 derart drückt, dass die Batterie 15 zuverlässig eine Stromversorgung für den mobilen Identifikationsgeber 1 bietet und stets mit den relevanten elektrischen Bauteilen in Kontakt steht.

In Figur 3 ist ein weiteres nicht unter die Erfindung fallendes Beispiel schematisch gezeigt, wie das Bezahlelement 30 innerhalb des Gehäuses 10 eines mobilen Identifikationsgebers 1 gemäß Figur 1 angeordnet sein kann. Der Batteriefachdeckel 12 weist eine Aufnahme 11b auf, in die das Bezahlelement 30 eingeführt ist und dort zuverlässig gehalten ist. Das Bezahlelement 30 kann beispielsweise über Rastelemente in der Aufnahme 11b zuverlässig gehalten sein. Zudem ist eine Platine 14 innerhalb des Gehäuses 10 angeordnet, auf der eine fest positionierte Dateneinheit 2 angeordnet ist. Die Dateneinheit 2 weist die Funktionsweise auf, die bereits in Figur 1 beschrieben worden ist. Ferner kontaktiert eine Batterie 15 die Platine 14, wodurch die Stromversorgung des mobilen Identifikationsgebers 1 gewährleistet ist. Auf der Innenseite 21 des Batteriefachdeckels 12 ist ein Lager 22 vorgesehen, das zuverlässig die Batterie 15 in ihrer Position hält. Somit ist ausgeschlossen, dass die Batterie 15 zumindest zeitweilig den Kontakt mit der Platine 14 verliert.

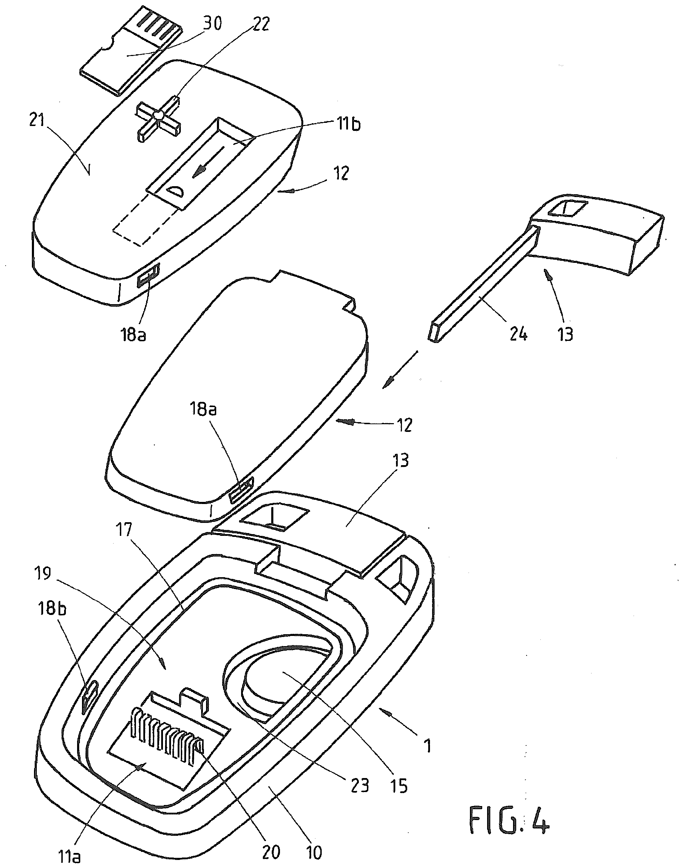

In Figur 4 ist ein weiteres nicht unter die Erfindung fallendes Beispiel eines mobilen Identifikationsgebers 1 gezeigt, der nach dem Prinzip gemäß Figur 1 funktioniert. Der Identifikationsgeber 1 weist ein Gehäuse 10 mit einer Öffnung 19 auf, die durch ein Dichtelement 17 umgeben ist. Innerhalb der Öffnung 19 ist eine Aufnahme 11a mit Kontakten 20 ausgeführt. Ferner weist die Öffnung 19 eine Einbuchtung 23 für eine dort eingelegte Batterie 15 auf. Die Öffnung 19 kann durch einen Batteriefachdeckel 12 verschlossen werden. Der Batteriefachdeckel 12 weist im Wesentlichen die Merkmale auf, die bereits in Figur 2 beschrieben worden sind. Das bedeutet, dass das Bezahlelement 30 in eine Aufnahme 11b auf der Innenseite 21 des Batteriefachdeckels 12 eingelegt werden kann. Seitlich zur Aufnahme 11b ist ein vorsprungartiges Lager 22 ausgeführt. Der Batteriefachdeckel 12 kann mit dem Bezahlelement 30 in die Öffnung 19 eingelegt werden, wobei gleichzeitig das Bezahlelement 30, insbesondere der Chip auf dem Bezahlelement 30 in Kontakt mit dem Kontakt 20 innerhalb der Aufnahme 11a kommt. Der Batteriefachdeckel 12 ist im eingesetzten Zustand durch eine Notschlüsselhandhabe 13 gesichert. Das bedeutet, dass der Batteriefachdeckel 12 nicht ohne Weiteres aus dem Gehäuse 10, insbesondere aus der Öffnung 19 entfernt werden kann. Hierzu ist erforderlich, dass zunächst die Notschlüsselhandhabe 13 aus dem Gehäuse 10 herausgezogen wird. Erst dann kann der Batteriefachdeckel 12 mit dem Bezahlelement 30 aus dem Gehäuse 10 entnommen werden. Der Batteriefachdeckel 12 ist mit Rastelementen 18a, in Form von Einbuchtungen ausgeführt, die im eingesetzten Zustand innerhalb des Identifikationsgebers 1 an Gegenrastelementen 18b wirken. Die Gegenrastelemente 18b sind als Vorsprünge ausgeführt, die in die Einbuchtungen 18a eingreifen.

Die Notschlüsselhandhabe 13 weist zudem einen mechanischen Schlüssel 24 auf, der für eine manuelle Aktivierung der Schließvorrichtung des Kraftfahrzeuges dient. Der mechanische Schlüssel 24 befindet sich im eingesetzten Zustand ebenfalls in einer Aufnahme des Gehäuses die nicht explizit gezeigt ist.

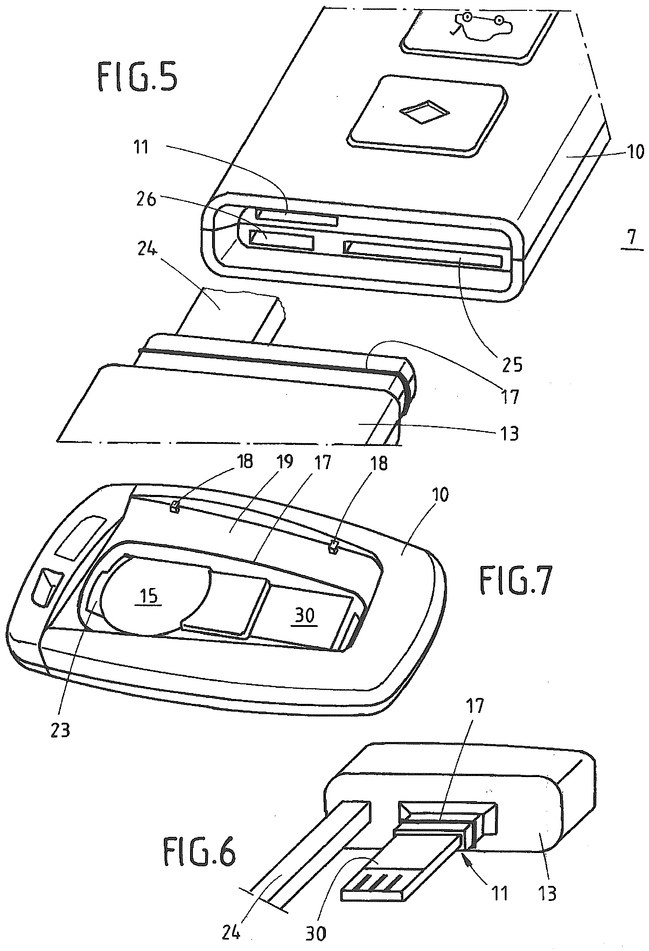

In Figur 5 ist ein erfindungsgemäßes Ausführungsbeispiel eines mobilen Identifikationsgebers 1 gezeigt, der ein Bezahlelement 30 gemäß Figur 1 aufweist. Der Identifikationsgeber 1 weist ein Gehäuse 10 auf, welches eine Öffnung 25 umfasst, in der die Batterie für den Identifikationsgeber 1 eingesetzt ist. Seitlich hierzu ist eine Öffnung 26 vorgesehen, in die der mechanische Schlüssel 24 einführbar ist, der an der Notschlüsselhandhabe 13 angeordnet ist. Oberhalb der Öffnung 26 ist die Aufnahme 11 für das Bezahlelement vorgesehen, welches bei Bedarf aus dem Gehäuse 10 vom Benutzer entnommen werden kann, nachdem die Notschlüsselhandhabe 13 vom restlichen Gehäuse 10 herausgezogen worden ist. Um eine zuverlässige Abschirmung von dem Außenbereich 7 zu erreichen, weist die Notschlüsselhandhabe 13 ein umlaufendes Dichtelement 17 auf, welches im eingesetzten Zustand der Notschlüsselhandhabe 13 zuverlässig die elektronischen Bauteile innerhalb des Gehäuses 10, insbesondere die Batterie 15, das Bezahlelement 30 etc. vor Feuchtigkeit, Schmutzpartikel, etc. schützt.

Figur 6 zeigt eine weitere nicht unter die Erfindung fallende Alternative, bei der das Bezahlelement 30 in einer Aufnahme 11 einer Notschlüsselhandhabe 13 zuverlässig gehalten ist. An der Aufnahme 11 ist zudem ein Dichtelement 17 vorgesehen, welches umlaufend verläuft und eine zuverlässige Abdichtung des Bezahlelementes 30 im eingesetzten Zustand der Notschlüsselhandhabe 13 im explizit nicht dargestellten Restgehäuse des Identifikationsgebers 1 bietet. Benachbart und beabstandet zum Bezahlelement 30 weist die Notschlüsselhandhabe 13 einen mechanischen Schlüssel 24 auf. Nachdem die Notschlüsselhandhabe 13 aus dem Gehäuse herausgezogen ist, ist es denkbar, dass das Bezahlelement 30 manuell aus der Aufnahme 11 vom Benutzer herausgezogen werden kann. Das Bezahlelement 30 kann beispielsweise über nicht explizit dargestellte Clipsverbindungen, Rastverbindungen, etc. in der Aufnahme 11 gehalten sein.

In Figur 7 ist eine weitere nicht unter die Erfindung fallende Variante eines mobilen Identifikationsgebers 1 gemäß Figur 1 gezeigt, wobei eine umlaufende Dichtung 17 (Dichtelement) in der Öffnung 19 des Gehäuses 10 angeordnet ist. Das Dichtelement 17 umgibt sowohl die eingesetzte Batterie 15 als auch das Bezahlelement 30. Ferner sind in der Öffnung 19 Rastelemente 18 vorgesehen, die für eine zuverlässige Befestigung des nicht explizit dargestellten Batteriefachdeckels sorgen. Ist der Batteriefachdeckel in der Öffnung 19 eingesetzt, liegt das Dichtelement 17 unmittelbar am Deckel an, wodurch das Bezahlelement 30 sowie die Batterie 15 zuverlässig vom Außenbereich 7 geschützt sind.

### Bezugszeichenliste

- 1: mobiler Identifikationsgeber
- 2: Dateneinheit (fest)
- 3: Kommunikationsschnittstelle
- 4: Kraftfahrzeug
- 5: Kommunikationsschnittstelle von 4
- 6: Zahlungssystem
- 7: Außenbereich

- 10: Gehäuse
- 11: Aufnahme
- 12: Batteriefachdeckel
- 13: Notschlüssel
- 14: Platine
- 15: Batterie
- 16: Display
- 17: Dichtelement
- 18: Rastelement
- 18a,b: Rastelement
- 19: Öffnung

- 20: Kontakt
- 21: Innenseite von 12
- 22: Lager
- 23: Einbuchtung
- 24: mechanischer Schlüssel
- 25: Öffnung
- 26: Öffnung

- 30: Bezahlelement
- 31: Kommunikationsschnittstelle von 30

## Patentansprüche

1. Mobiler Identifikationsgeber (1) für eine Aktivierung einer Schließvorrichtung eines Kraftfahrzeuges, der eine fest in einem Gehäuse (10) befestigte Dateneinheit (2) mit gespeicherten Identifikationsdaten, eine Kommunikationsschnittstelle (3) und eine Notschlüsselaufnahme (13) aufweist, die mit einer kraftfahrzeugsseitigen Kommunikationsschnittstelle (5) in Kommunikation bringbar ist,
wobei das Gehäuse (10) eine Aufnahme (11) aufweist, in der ein herausnehmbares Bezahlelement (30) gehalten ist, **dadurch gekennzeichnet, dass** die Notschlüsselhandhabe (13), die lösbar am Gehäuse (10) angeordnet ist, die Aufnahme (11) vom Außenbereich (7) verschließt.

2. Mobiler Identifikationsgeber (1) nach Anspruch 1,
**dadurch gekennzeichnet,**
**dass** das Bezahlelement (30) mit einem elektronischen Zahlungssystem (6) in Datenkommunikation bringbar ist, insbesondere dass das Bezahlelement (30) eine Kreditkartenfunktion und/oder eine Debitkartenfunktion aufweist.

3. Mobiler Identifikationsgeber (1) nach Anspruch 2,
**dadurch gekennzeichnet,**
**dass** das Bezahlelement (30) eine eigene Kommunikationsschnittstelle (31) für die Kommunikation mit dem Zahlungssystem (6) aufweist.

4. Mobiler Identifikationsgeber (1) nach einem der vorhergehenden Ansprüche,
**dadurch gekennzeichnet,**
**dass** die Kommunikationsschnittstelle (3) des Identifikationsgebers (1) gleichzeitig zur Kommunikation mit dem Zahlungssystem (6) dient.

5. Mobiler Identifikationsgeber (1) nach einem der vorhergehenden Ansprüche,
**dadurch gekennzeichnet,**
**dass** die Aufnahme (11) gekapselt ist, sodass das Bezahlelement (30) zuverlässig vom Außenbereich (7) abgedichtet ist.

6. Mobiler Identifikationsgeber (1) nach einem der vorhergehenden Ansprüche,
**dadurch gekennzeichnet,**
**dass** eine Platine (14) innerhalb des Gehäuses (10) angeordnet ist, die in Kontakt mit dem Bezahlelement (30) und/oder mit der fest angeordneten Dateneinheit (2) und/oder mit der Kommunikationsschnittstelle (3) des Identifikationsgebers (1) und/oder mit einer Batterie (15) steht.

7. Mobiler Identifikationsgeber (1) nach einem der vorhergehenden Ansprüche,
**dadurch gekennzeichnet,**
**dass** die Aufnahme (11) derart am Gehäuse (10) ausgeführt ist, dass das Bezahlelement (30) von außen entnehmbar ist.

8. Mobiler Identifikationsgeber (1) nach einem der vorhergehenden Ansprüche,
**dadurch gekennzeichnet,**
**dass** die Kommunikationsschnittstelle (31) des Bezahlelementes (30) in einem Frequenzbereich von ca. 13,56 MHz arbeitet und/oder die Kommunikationsschnittstelle (31) des Bezahlelementes (30) eine Reichweite von weniger als 20 cm, insbesondere weniger als 10 cm hat.

9. Mobiler Identifikationsgeber (1) nach einem der vorhergehenden Ansprüche,
**dadurch gekennzeichnet,**
**dass** das Gehäuse (10) ein Display (16) aufweist, das mit dem Bezahlelement (30) verbunden ist und/oder mit dem elektrischen Zahlungssystem (6) verbindbar ist, wobei insbesondere das Display (16) Anzeige- und Eingabefunktionen mitumfasst.

10. Mobiler Identifikationsgeber (1) nach einem der vorhergehenden Ansprüche,
**dadurch gekennzeichnet,**
**dass** über eine Rastverbindung das Bezahlelement (30) in der Aufnahme (11) gehalten ist.

## Claims

1. Mobile identification transmitter (1) for activating a locking device of a motor vehicle, which comprises a data unit (2) containing stored identification data which is permanently fixed in a housing (10), a communication interface (3) and an emergency key holder (13), which can be brought into communication with a communication interface (5) onboard the motor vehicle,
wherein the housing (10) has a holder (11) in which a removable payment element (30) is held, **characterised in that** the emergency key handle (13), which is releasably arranged on the housing (10), closes the holder (11) from the exterior (7).

2. Mobile identification transmitter (1) according to claim 1,
**characterised in that**
the payment element (30) can be brought into data communication with an electronic payment system (6), in particular **in that** the payment element (30) has a credit card function and/or a debit card function.

3. Mobile identification transmitter (1) according to claim 2,
**characterised in that**
the payment element (30) has its own communication interface (31) for communication with the payment system (6).

4. Mobile identification transmitter (1) according to any one of the preceding claims,
**characterised in that**
the communication interface (3) of the identification transmitter (1) at the same time serves to communicate with the payment system (6).

5. Mobile identification transmitter (1) according to any one of the preceding claims,
**characterised in that**
the holder (11) is encapsulated so that the payment element (30) is reliably sealed from the exterior (7).

6. Mobile identification transmitter (1) according to any one of the preceding claims,
**characterised in that**
a board (14) is arranged inside the housing (10), which board is in contact with the payment element (30) and/or with the permanently arranged data unit (2) and/or with the communication interface (3) of the identification transmitter (1) and/or with a battery (15).

7. Mobile identification transmitter (1) according to any one of the preceding claims,
**characterised in that**
the holder (11) is so formed on the housing (10) that the payment element (30) is removable from the outside.

8. Mobile identification transmitter (1) according to any one of the preceding claims,
**characterised in that**
the communication interface (31) of the payment element (30) operates in a frequency range of approximately 13.56 MHz and/or the communication interface (31) of the payment element (30) has a range of less than 20 cm, in particular less than 10 cm.

9. Mobile identification transmitter (1) according to any one of the preceding claims,
**characterised in that**
the housing (10) has a display (16) which is connected to the payment element (30) and/or can be connected to the electric payment system (6), wherein in particular the display (16) includes display and input functions.

10. Mobile identification transmitter (1) according to any one of the preceding claims,
**characterised in that**
the payment element (30) is held in the holder (11) by a snap-in connection.

## Revendications

1. Transmetteur d'identification (1) mobile pour une activation d'un dispositif de fermeture d'un véhicule automobile, qui présente une unité de données (2) fixée de manière solidaire dans un boîtier (10) avec des données d'identification mémorisées, une interface de communication (3) et un logement de clé d'urgence (13), qui peut être amené en communication avec une interface de communication (5) côté véhicule automobile,
dans lequel le boîtier (10) présente un logement (11), dans lequel un élément de paiement (30) enlevable est maintenu, **caractérisé en ce que** la poignée de clé d'urgence (13), qui est disposée de manière amovible au niveau du boîtier (10), ferme le logement (11) depuis la zone extérieure (7).

2. Transmetteur d'identification (1) mobile selon la revendication 1,
**caractérisé en ce**
**que** l'élément de paiement (30) peut être amené en communication de données avec un système paiement (6) électronique, en particulier **en ce que** l'élément de paiement (30) présente une fonction de carte de crédit et/ou une fonction de carte de débit.

3. Transmetteur d'identification (1) mobile selon la revendication 2,
**caractérisé en ce**
**que** l'élément de paiement (30) présente une interface de communication (31) propre pour la communication avec le système de paiement (6).

4. Transmetteur d'identification (1) mobile selon l'une quelconque des revendications précédentes,
**caractérisé en ce**
**que** l'interface de communication (3) du transmetteur d'identification (1) sert simultanément à la communication avec le système de paiement (6).

5. Transmetteur d'identification (1) mobile selon l'une quelconque des revendications précédentes,
**caractérisé en ce**
**que** le logement (11) est encapsulé si bien que l'élément de paiement (30) est étanchéifié avec fiabilité par rapport à la zone extérieure (7).

6. Transmetteur d'identification (1) mobile selon l'une quelconque des revendications précédentes,
**caractérisé en ce**
**qu'**une platine (14) est disposée à l'intérieur du boîtier (10), qui est en contact avec l'élément de paiement (30) et/ou avec l'unité de données (2) disposée de manière solidaire et/ou avec l'interface de communication (3) du transmetteur d'identification (1) et/ou avec une batterie (15).

7. Transmetteur d'identification (1) mobile selon l'une quelconque des revendications précédentes,
**caractérisé en ce**
**que** le logement (11) est réalisé de telle manière au niveau du boîtier (10) que l'élément de paiement (30) peut être retiré depuis l'extérieur.

8. Transmetteur d'identification (1) mobile selon l'une quelconque des revendications précédentes,
**caractérisé en ce**
**que** l'interface de communication (31) de l'élément de paiement (30) fonctionne dans une plage de fréquences d'env. 13,56 MHz et/ou l'interface de communication (31) de l'élément de paiement (30) a une portée inférieure à 20 cm, en particulier inférieure à 10 cm.

9. Transmetteur d'identification (1) mobile selon l'une quelconque des revendications précédentes,
**caractérisé en ce**
**que** le boîtier (10) présente un affichage (16), qui est relié à l'élément de paiement (30) et/ou peut être relié au système de paiement (6) électrique, dans lequel en particulier l'affichage (16) comprend conjointement des fonctions d'affichage et de saisie.

10. Transmetteur d'identification (1) mobile selon l'une quelconque des revendications précédentes,
**caractérisé en ce**
**que** l'élément de paiement (30) est maintenu dans le logement (11) par l'intermédiaire d'une liaison par enclenchement.
